# EUROPEAN PATENT APPLICATION

(11) **EP 4 847 759 A1**
(43) Date of publication of application: **02.12.2026**
(21) Application number: 26181127.7
(22) Date of filing: 26.05.2026
(51) Int. Cl.: F02C 7/236, F02C 9/26, F02C 9/28, F02C 9/36

(54) **FUEL SYSTEM OF AIRCRAFT ENGINE HAVING MOTIVE FLOW VALVE**

(30) Priority: 26.05.2025 US 202519218484
(71) Applicant: Pratt & Whitney Canada Corp., Longueuil, Québec J4G 1A1 (CA)
(72) Inventor: SAINTIGNAN, Cédric, Longueuil, J4G 1A1 (CA); TREMBLAY, Marc-André, Longueuil, J4G 1A1 (CA); MOKHTAR, Hytham, Longueuil, J4G 1A1 (CA); ST-LAURENT, Gabriel, Longueuil, J4G 1A1 (CA)
(74) Representative: Dehns

(57) **Abstract**

A fuel system (40; 140) has: a fuel tank (31); a main conduit; a fuel metering unit (50) including a low-pressure pump (44A), a fuel filter (62), a main pump (44B), and a metering valve (51) having an inlet connected to the main pump (44B), an outlet, and a return outlet; a recirculation conduit (65) connecting the return outlet to the main conduit; a boost pump (43; 43A) connecting the fuel tank (31) to the fuel metering unit (50); an ejector pump (60; 60A); a motive flow valve (64) between the ejector pump (60; 60A) and the fuel metering unit (50) to fluidly connect the return outlet to the ejector pump (60; 60A); and a controller (70) configured to: determine that the aircraft (1) engine is subjected to a condition causing a temperature of the fuel to be outside an operation temperature range, or determine that the boost pump (43; 43A) is powered on; and cause the motive flow valve (64) to block communication between the return outlet and the ejector pump (60; 60A), and activate the boost pump.

## Description

### TECHNICAL FIELD

The invention relates generally to aircraft engines and, more particularly, to fuel systems of such engines.

### BACKGROUND

Aircraft engines have fuel systems configured for supplying a fuel flow from a fuel tank to a combustion chamber. A typical fuel system includes a fuel metering unit configured to adjust a flow rate of the fuel supplied to the combustion chamber. Fuel systems often have heat management systems to optimize fuel temperature for the combustion chamber while avoiding icing of the fuel. These systems are satisfactory for their intended purposes, however improvements are sought.

### SUMMARY

In one aspect of the invention, there is provided a fuel system for an aircraft engine having a combustion chamber, comprising: a fuel tank for containing a fuel; a fuel conduit (e.g., a main fuel conduit) fluidly connecting the fuel tank to the combustion chamber; a fuel metering unit fluidly connected on the main fuel conduit (e.g., disposed between the fuel tank and the combustion chamber) and including a first or low-pressure pump, a filter (e.g., a fuel filter), a second or main pump, and a metering valve (e.g., each connected to the fuel conduit, e.g., in series), the metering valve having an inlet fluidly connected to the main pump, a first or main outlet fluidly connected to the combustion chamber, the fuel metering unit having a second or return outlet defined by one of the metering valve and the main pump; a recirculation conduit fluidly connecting the return outlet (of the metering valve or the main pump) to the main fuel conduit upstream of the fuel filter while bypassing the fuel tank; a third or boost pump fluidly connecting the fuel tank to the fuel metering unit via the main fuel conduit; a fourth or ejector pump having a first inlet (e.g., a motive flow inlet) fluidly connected to the return outlet of the metering valve, a second inlet (e.g., an induced inlet) fluidly connected to the fuel tank, and an outlet fluidly connected to the main pump of the fuel metering unit; a motive flow valve fluidly connected between the ejector pump and the fuel metering unit (e.g., between the ejector pump and the return outlet) to selectively allow or block fluid communication between the return outlet and the motive flow inlet of the ejector pump; and a controller having a processing unit and a computer-readable medium operatively connected to the processing unit and having instructions stored thereon executable by the processing unit to: determine that the aircraft engine is subjected to a condition causing a temperature of the fuel entering the fuel metering unit to be outside an operation temperature range, or determine that the boost pump is powered on; and cause the motive flow valve to block fluid communication between the return outlet of the metering valve and the motive flow inlet of the ejector pump, and either activate the boost pump to supply the fuel from the fuel tank to the fuel metering unit or maintain the boost pump powered on.

The fuel system described above includes, in certain embodiments, one or more of the following features, in whole or in part, and in any combination.

In any of the aspects or embodiments described above or herein, the computer-readable medium may have the instructions stored thereon executable by the processing unit to determine that the aircraft engine is subjected to the condition by, optionally: receiving a signal from a sensor, the signal indicative of the temperature of the fuel being outside the operation temperature range.

In any of the aspects or embodiments described above or herein, the computer-readable medium may have the instructions stored thereon executable by the processing unit to determine that the aircraft engine is subjected to the condition by, optionally: determining that the aircraft engine is operated in a transient condition.

In any of the aspects or embodiments described above or herein, the computer-readable medium may have the instructions stored thereon executable by the processing unit to determine that the aircraft engine is operated in the transient condition by, optionally: receiving a signal from a sensor, the signal indicative that a power generated by the aircraft engine is decreasing.

In any of the aspects or embodiments described above or herein, the sensor may be a position sensor operatively connected to a power lever of the aircraft engine.

In any of the aspects or embodiments described above or herein, the computer-readable medium may have the instructions stored thereon executable by the processing unit to determine that the aircraft engine is subjected to the condition by, optionally: receiving a signal from a sensor, the signal indicative of an ambient temperature of an environment in which the aircraft engine is being operated; and determining that the ambient temperature is outside an ambient temperature range.

In any of the aspects or embodiments described above or herein, the computer-readable medium may have the instructions stored thereon executable by the processing unit to determine that the aircraft engine is subjected to the condition by, optionally: determining that the boost pump is powered and drawing fuel out of the fuel tank.

In any of the aspects or embodiments described above or herein, the computer-readable medium may have the instructions stored thereon executable by the processing unit to determine that the aircraft engine is subjected to the condition by, optionally: receiving a command from a pilot of an aircraft equipped with the aircraft engine.

In any of the aspects or embodiments described above or herein, the computer-readable medium may have the instructions stored thereon executable by the processing unit to determine that the aircraft engine is subjected to the condition by determining that the temperature of the fuel is above a temperature threshold, the computer-readable medium further may have instructions stored thereon executable by the processing unit to: upon determining that the temperature of the fuel is above the temperature threshold, powering the boost pump to supply fuel to the fuel metering unit solely via the boost pump.

In any of the aspects or embodiments described above or herein, the computer-readable medium may have the instructions stored thereon executable by the processing unit to determine that the aircraft engine is subjected to the condition by determining that the temperature of the fuel is below a temperature threshold, the computer-readable medium further may have instructions stored thereon executable by the processing unit to: upon determining that the temperature of the fuel is below the temperature threshold, recirculating the fuel outputted from the return outlet of the metering valve back to the main pump while bypassing the fuel tank.

In another aspect, there is provided a method of mitigating fuel supplied to a combustion chamber of an aircraft engine (e.g., having the fuel system of any of the aspects or embodiments described above or herein) being outside an operation temperature range, comprising: driving a fuel flow from a fuel tank containing a first or boost pump and a second or ejector pump to a fuel metering unit including a third or low-pressure pump, a fuel filter, a fourth or main pump, and a metering valve, the fuel metering unit dividing the fuel flow into a first or burn flow to the combustion chamber and a second or return flow to the ejector pump to drive the fuel flow from the fuel tank; determining that the aircraft engine is subjected to a condition causing a temperature of the fuel flow to be outside the operation temperature range or that the boost pump is powered on; and preventing the return flow from reaching the ejector pump and supplying the fuel flow to the fuel metering unit using the boost pump.

The method as described above includes, in certain embodiments, one or more of the following features and/or steps, in whole or in part, and in any combination.

In any of the aspects or embodiments described above or herein, the determining that the aircraft engine is subjected to the condition may include, additionally or alternatively: receiving a signal from a sensor, the signal indicative of the temperature of the fuel flow being outside the operation temperature range.

In any of the aspects or embodiments described above or herein, the determining that the aircraft engine is subjected to the condition may include, additionally or alternatively: determining that the aircraft engine is operated in a transient condition.

In any of the aspects or embodiments described above or herein, the determining that the aircraft engine is operated in the transient condition may include, additionally or alternatively: receiving a signal from a sensor, the signal indicative that a power generated by the aircraft engine is decreasing or increasing.

In any of the aspects or embodiments described above or herein, the receiving of the signal indicative that the power is decreasing may include, additionally or alternatively: receiving the signal indicative of a position of a power lever of the aircraft engine.

In any of the aspects or embodiments described above or herein, the determining that the aircraft engine is subjected to the condition may include, additionally or alternatively: determining that an ambient temperature of an environment in which the aircraft engine is being operated is outside an ambient temperature range.

In any of the aspects or embodiments described above or herein, the determining that the aircraft engine is subjected to the condition may include, additionally or alternatively: determining that the boost pump is powered, the boost pump fluidly connecting the fuel tank to the main pump.

In any of the aspects or embodiments described above or herein, the determining that the aircraft engine is subjected to the condition may include, additionally or alternatively: receiving a command from a pilot of an aircraft equipped with the aircraft engine.

In any of the aspects or embodiments described above or herein, the determining that the aircraft engine is subjected to the condition may include, additionally or alternatively: determining that the temperature of the fuel is above a temperature threshold; and the method may further comprise powering the boost pump to supply the fuel flow to the fuel metering unit solely via the boost pump (e.g., in response to said determining that the temperature of the fuel is above a temperature threshold).

In any of the aspects or embodiments described above or herein, the determining that the aircraft engine is subjected to the condition may include, additionally or alternatively: determining that the temperature of the fuel is below a temperature threshold; and recirculating the return flow back to the main pump while bypassing the fuel tank (e.g., in response to said determining that the temperature of the fuel is below a temperature threshold).

### BRIEF DESCRIPTION OF THE DRAWINGS

Certain exemplary embodiments will now be described in greater detail by way of example only and with reference to the accompanying figures in which:
Fig. 1 is a schematic cross-sectional view of an aircraft engine depicted as a gas turbine engine;
Fig. 2 is a schematic view of a fuel system of the gas turbine engine of Fig. 1;
Fig. 3 is a schematic view of a possible implementation of the fuel system of Fig. 2 into the gas turbine engine of Fig. 1 in an aircraft;
Fig. 4 is a schematic view of another possible implementation of the fuel system of Fig. 2;
Fig. 5 is a schematic view of another possible implementation of the fuel system of Fig. 2;
Fig. 6 is a flowchart illustrating steps of a method for mitigating fuel supplied to a combustion chamber of an aircraft engine being outside an operation temperature range; and
Fig. 7 is a schematic representation of a controller.

### DETAILED DESCRIPTION

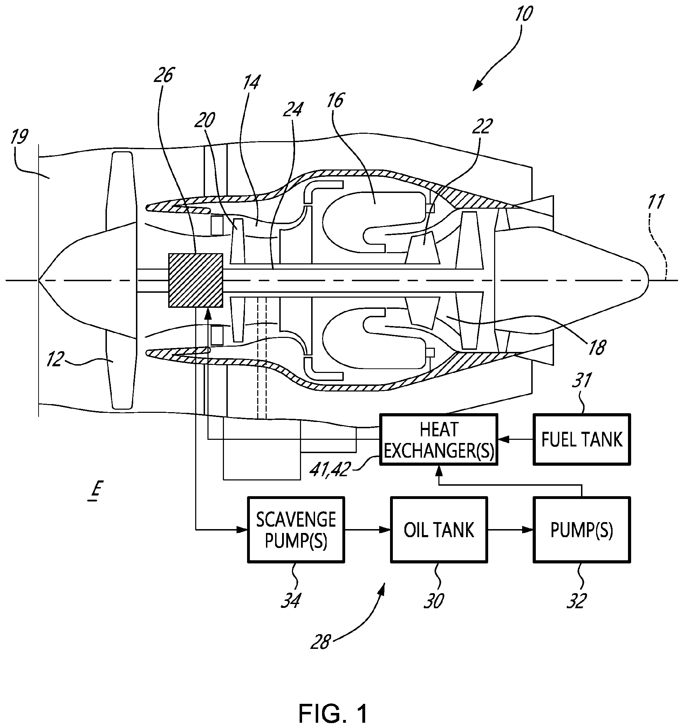

Fig. 1 illustrates an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. More specifically, the gas turbine engine 10 has a core gas path including an intake 19 for receiving air. The compressor section 14 has at least one compressor 20 extending across the core gas path and the turbine section 18 has at least one turbine 22 extending across the core gas path, with the at least one compressor 20 and the at least one turbine 22 being rotatable with a rotary shaft 24 supported within the gas turbine engine 10 by bearings 26 (only one being shown for illustration purposes). A lubricant or oil system 28 is provided for circulating lubricant to the bearings 26 and back to a lubricant reservoir 30. It will be appreciated that the principles of the disclosure apply to any aircraft engines, such as internal combustion engines (e.g., piston engine, rotary engine), any type of gas turbine engines, (e.g., turbofan, turboshaft, and turboprop), and auxiliary power unit.

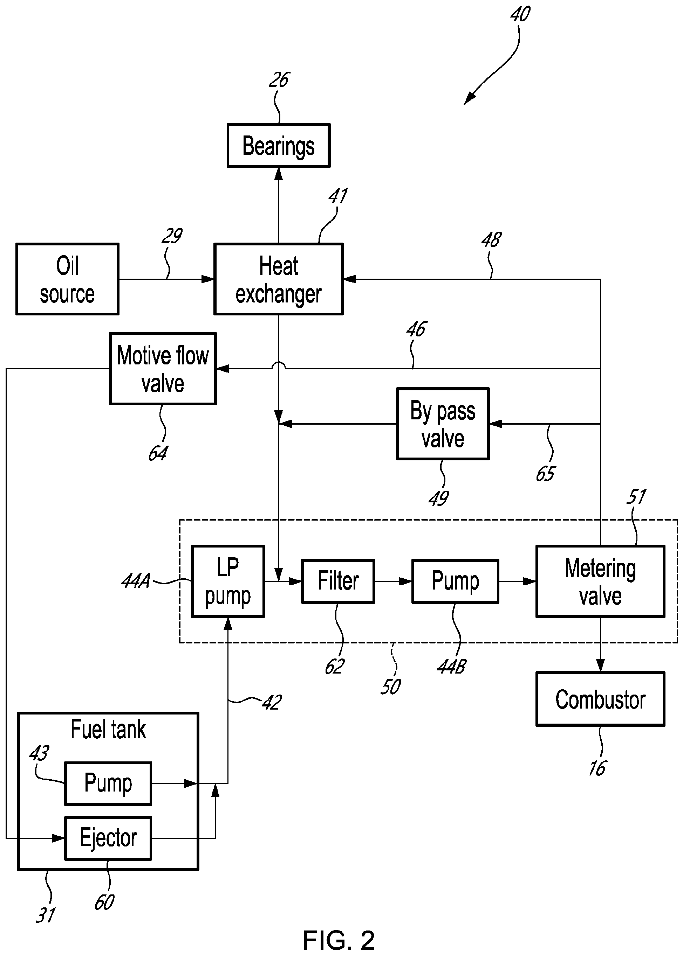

Referring to Fig. 2, in the embodiment shown, the gas turbine engine 10 has a fuel system 40 that is used to provide fuel from a fuel tank 31 to the combustor 16 of the gas turbine engine 10. In this embodiment, the fuel system 40 has a heat exchange function configured to exchange heat between different fluids for proper operation of the gas turbine engine 10. In the present case, the fuel system 40 includes a heat exchanger 41, which may be referred to as a fuel-lubricant heat exchanger (FOHE), used for transferring heat from the lubricant of the lubricant system 28 to fuel flowing from the fuel tank 31, or any other fuel source, to the combustor 16 of the gas turbine engine 10 for combustion. The FOHE may be used to protect a filter 62 against icing and to cool down the oil while keeping the size of an air-oil cooler as small as possible. Preheating the fuel as such may increase efficiency of the combustion of the fuel. Preheating the fuel may also elevate the temperature of the fuel above a minimum requirement during cold day operation. In some cases, the heat exchanger 41 may be used to transfer or extract heat to/from an aircraft system in need. The fuel system 40 may include an air-cooled lubricant cooler (ACOC) used for transferring heat from the lubricant to ambient air flowing in a bypass duct of the gas turbine engine 10.

The fuel system 40 includes a main fuel conduit (or simply "main conduit") 42 that has an inlet hydraulically connected to the fuel tank 31 and an outlet hydraulically connected to the combustor 16. A boost pump 43 is used to draw fuel from the fuel tank 31 and hydraulically connected to the main fuel conduit 42 to generate a fuel flow and to increase fluid pressure. The boost pump 43 may be configured to output a mass flow rate that may be variable as a function of a pressure in the main fuel conduit 42 downstream of the boost pump 43. In other words, a pressure rise provided by the boost pump 43 may vary as a function of a mass flow rate in the main fuel conduit 42 flowing through the boost pump 43. Typically, such a boost pump includes an impeller rotatable to create a pressure rise between its inlet and its outlet to draw the fuel from the fuel tank 31.

The fuel system 40 includes a fuel metering unit 50 that is configured to control a flow rate of fuel supplied from the fuel tank 31 to the combustor 16. In the embodiment shown, the fuel metering unit 50 includes a low-pressure pump 44A located outside the fuel tank 31 and hydraulically connected to the fuel tank 31 via the main fuel conduit 42. The low-pressure pump 44A is configured to overcome pressure drops through the main fuel conduit 42. The fuel metering unit 50 further includes the fuel filter 62 downstream of the low-pressure pump 44A, and a main pump 44B being hydraulically connected to the main fuel conduit 42 downstream of both of the low-pressure pump 44A and the boost pump 43. The main pump 44B may be referred to as a high-pressure pump due to the relatively high pressure rise it offers in relation to the low-pressure pump 44A located upstream in order to condition the fuel for combustion. The pressure generated by the main pump 44B may also be used to support downstream components and system functionalities. A mass flow rate outputted or generated by the main pump 44B may not vary as a function of a pressure in the main fuel conduit 42 downstream of the main pump 44B. Such a high-pressure pump is sometimes referred to as a fixed-displacement pump (e.g., gear pump). At a given rotational speed, a fixed mass flow rate is drawn from the main pump 44B. The main pump 44B may be drivingly engaged by a shaft (e.g., low-pressure shaft) of the gas turbine engine 10 such that a rotational speed of the main pump 44B is dictated by that of the shaft. A gearbox may be used to create a speed ratio between the shaft of the gas turbine engine and the main pump 44B.

The fuel metering unit 50 also includes a metering valve 51 configured to adjust a flow rate of the fuel reaching the combustor 16. It will be appreciated that the functions carried by the metering valve 51 may be provided by a combination of a plurality of valves and other components (e.g., orifices, electrical components, and so on), which are not depicted here for clarity. As illustrated in Fig. 2, the fuel metering unit 50 receives fuel from the fuel tank 31 and allows a portion (e.g., from 0% to 100%) of that fuel to reach the combustor 16 and redirects a remainder of that fuel back to the fuel tank 31. Put differently, the fuel metering unit 50, more specifically the metering valve 51, may have a main outlet fluidly connected to the combustor 16 and a return outlet configured to output an excess flow of fuel, which may be referred to as a spill flow. In some operating conditions, a mass flow rate outputted by the main pump 44B is substantially higher than necessary for combustion. The metering valve 51 has the return outlet to permit the excess fuel to flow to other locations as will be discussed below. Namely, the excess fuel may be used as a source of energy at the aircraft level, for example to power an ejector pump to transfer fluids, including to transfer fuel from the tank to the engine. The return outlet may be defined by the main pump 44B in some embodiments. The return outlet may be defined by any components of the fuel metering unit 50 downstream of the filter 62 and low-pressure pump 44A.

Still referring to Fig. 2, a portion of the fuel expelled from the metering valve 51 via the return outlet may flow through the heat exchanger 41, via a heat exchanger conduit 48, to be heated by oil from the oil source. The heated fuel may be reinjected back into the main fuel conduit 42 upstream of the fuel filter 62. The heated fuel may help in mitigating ice formation in the fuel in cold operating conditions. The heat exchanger 41 includes at least one first conduit in fluid communication with a lubricant conduit 29 of the lubricant system 28 (Fig. 1) and at least one second conduit for flowing fuel. The heat exchanger 41 is used to warm up the fuel and cool down the lubricant by providing a heat exchange relationship between the at least one first conduit and the at least one second conduit. Therefore, a portion of the flow generated by the fuel metering unit 50 and not required by the combustor 16 or by the motive system is leveraged to cool down the lubricant of the lubricant system 28 and heat up the fuel flowing in the main fuel conduit 42 upstream of the filter 62. This portion of the flow may be referred to as a heat exchanger flow.

In some cases, it may be desired to avoid warming up the flow outputted via the return outlet of the fuel metering unit 50. Such a situation may occur if the fuel outputted by the metering valve 51 is already at a sufficient temperature. To this end, the fuel system 40 further includes a recirculation conduit 65 that is fluidly connected to the return outlet of the metering valve 51 and that is fluidly connected also to the main fuel conduit 42 upstream of the filter 62. The recirculation conduit 65 thus forms a loop connecting the metering valve 51 to another location on the main fuel conduit 42 upstream of the filter 62. In order to control a flow rate of the fuel that flows through the heat exchanger 41, a bypass valve 49 may be fluidly connected on the recirculation conduit 65 and maybe operable to selectively allow or block fluid communication between the metering valve 51 and the main fuel conduit 42 via the recirculation conduit 65. The bypass valve 49 may have a plurality of positions to control a flow rate of the fuel that flows through it. The bypass valve 49 may be a thermostatic valve in that it may be a passive device able to close or open as a function of the temperature of the fuel that flows through it. The bypass valve 49 may alternatively be a servo valve controlled by an actuator which itself may be operatively connected to a controller. The flow of fuel that flows through the recirculation conduit 65 may be referred to as a spill flow.

Still referring to Fig. 2, it may be possible to use yet another portion of the fuel outputted by the metering valve 51 to power an ejector pump 60, which may be located inside the fuel tank 31. In this embodiment, a return conduit 46 is fluidly connected to the return outlet of the metering valve 51 and is fluidly connected to the ejector pump 60. The ejector pump 60 has a first, or motive flow, inlet fluidly connected to the return conduit 46, a second, or induced flow, inlet fluidly connected to the fuel tank 31, and an outlet fluidly connected to the fuel metering unit 50. Therefore, the ejector pump 60 is used to leverage the motive flow leaving the fuel metering unit 50 and flowing back toward the fuel tank 31 through the return conduit 46. An ejector pump, also known as a jet pump, operates on the principle of fluid dynamics and utilizes the Venturi effect to move fluids. It comprises a primary fluid (motive fluid) that is injected at high pressure through a nozzle, increasing its velocity and decreasing its pressure. This high-velocity fluid then enters a Venturi tube, where the cross-sectional area narrows, creating a low-pressure zone. This low-pressure zone induces the suction of the fuel in the fuel tank 31. The return flow fuel from the fuel metering unit 50 and the fuel located in the fuel tank 31 mix within the Venturi tube, where the kinetic energy of the return flow from the fuel metering unit 50 is transferred to the fuel that sits in the fuel tank 31. The mixed fuels then pass through a diffuser, where the cross-sectional area increases, causing the velocity to decrease and the pressure to increase, thus allowing the fluid to be discharged at a higher pressure than the initial pressure of the fuel in the fuel tank 31. Therefore, the flow that exits the fuel metering unit 50 and that flows back towards the fuel tank 31, which may be referred as a motive flow, is used to power the ejector pump 60.

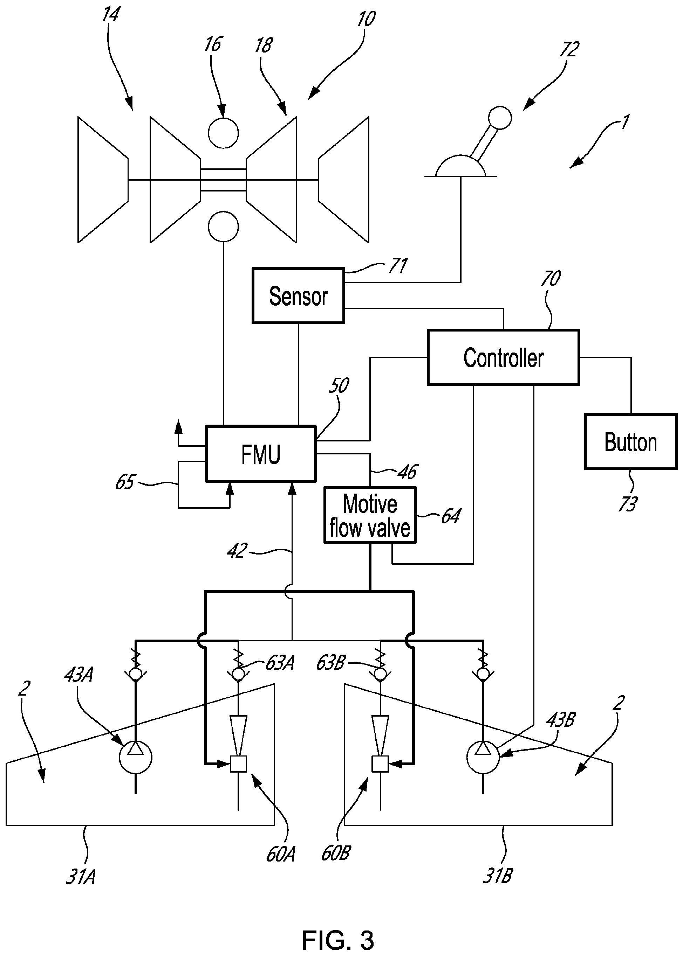

Referring now to Fig. 3, a possible implementation of the fuel system 40 inside of an aircraft 1 is illustrated. As illustrated, the aircraft 1 includes wings 2 and the fuel tank 31 may include two fuel tanks 31A, 31B each received within a respective one of the wings 2. Similarly, the boost pump 43 may include two boost pumps 43A, 43B each received within a respective one of the two fuel tanks 31A, 31B. More than one boost pumps and ejectors may be used within each fuel tank in some embodiments. It will be appreciated that the aircraft 1 may include more than two fuel tanks and may include, for instance, a fuel tank in a fuselage, or in other parts of the aircraft 1. Each fuel tank may be equipped with a dedicated boost pump. The boost pumps 43A, 43B may be activated asymmetrically such as, for instance, balance the fuel between the two fuel tanks 31A, 31B for weight and balance purposes. In some embodiments, the ejector pump 60 includes two ejector pumps 60A, 60B each located within a respective one of the fuel tanks 31A, 31B. It will be appreciated only one fuel tank 31, one ejector pump 60, one boost pump 43 may be used without departing from the scope of the present disclosure.

The principles of operation of the ejector pumps 60A, 60B has been described herein above. In addition, a portion or all of the motive flow supplied by the fuel metering unit 50 is at a pressure higher than a fuel pressure inside the fuel tanks 31A, 31B, and higher than the engine inlet pressure. This motive flow feeds convergent sections of the ejector pumps 60A, 60B where it accelerates, creating a static pressure, downstream of the convergent sections, lower than the fuel pressure in the fuel tanks 31A, 31B. This lower pressure sucks and entrains fuel from the fuel tanks 31A, 31B. The motive flow mixes with fuel from the fuel tanks 31A, 31B downstream of the ejector pumps 60A, 60B and returns to the engine inlet port at a pressure higher than the fuel pressure inside the fuel tanks 31A, 31B, but lower than the motive flow pressure.

It has been observed by the inventors of the present disclosure that, on some engine applications, motive flow supplied by the fuel metering unit 50 can lead to high or low engine inlet fuel temperature that can become outside an operational fuel temperature range of the gas turbine engine 10. This may be detrimental to the low-pressure pump 44A in some cases.

Namely, the motive flow supplied by the fuel system 40 has been filtered by an engine main fuel filter 62 and therefore has also been heated to protect the fuel filter 62 against ice. The motive flow may thus be warmer than the fuel contained in the fuel tanks 31A, 31B. Mixing motive flow from the engine with fuel from the fuel tanks 31A, 31B (e.g. in the ejector pumps 60A, 60B) may provide the benefit of warming up the fuel from the tanks, which supports the airframe or engine fuel heater in protecting the engine main fuel filter 62 against icing, when operating in cold conditions (e.g., fuel tank temperature below water freezing temperature).

Conversely, in some operating conditions, it may have a drawback of leading to higher engine fuel inlet temperatures when operating in hot conditions. For steady-state operation, this is typically mitigated by reducing or stopping the heat transferred from the engine or aircraft lubricant system to the fuel, for instance, by at least partially bypassing the heat exchanger 41 with the recirculation conduit 65 as described above. However, transient aircraft and engine operation may lead to significant engine inlet fuel temperature spikes. For example, when the engine is operated at high power rating for a long period of time (e.g. during take-off and climb), the lubricant temperature may increase and the fuel heater temperature may also increase. When suddenly reducing engine power (e.g. reducing to cruise rating), the fuel flow burnt in the engine combustor, that is, the fuel that leaves the fuel metering unit 50 to flow to the combustor 16, which may be referred to as the burn flow, and coming from the fuel tanks 31A, 31B is suddenly reduced, which causes an increase of the flow rate of the flow that flows out of the metering valve 51 via the return outlet. The thermal inertia of the engine and aircraft systems is such that the temperature of the motive flow feeding the ejector pumps 60A, 60B may remain high, and may even transiently increase, while the induced flow rate from fuel tanks 31A, 31B is suddenly reduced. This may result in a sudden increase of the fuel temperature at an inlet of the low-pressure pump 44A. Such a fuel temperature spike at the inlet of the low-pressure pump 44A may be detrimental to the low-pressure pump 44A.

In this embodiment, the boost pumps 43A, 43B are back up devices that are powered by an electric system of the aircraft 1. The boost pumps 43A, 43B may be turned on manually or automatically depending on the situations. For instance, the boost pumps 43A, 43B may be turned on manually to start the gas turbine engine 10 since there is no motive flow that exits the fuel metering unit 50 and available until the engine is running. The boost pumps 43A, 43B may be turned on automatically upon detection of a low engine inlet fuel pressure with a sensor or to rebalance the fuel within the fuel tanks 31A, 31B.

Typically, the output pressure of the boost pumps 43A, 43B is higher than the pressure generated by the ejector pumps 60A, 60B, and first non-return valves 63A, 63B (e.g., check valves) are located downstream of the ejector pumps 60A, 60B to prevent the fuel flow generated by the boost pumps 43A, 43B to re-enter the fuel tanks 31A, 31B through the ejector pumps 60A, 60B.

When operating with cold fuel, and when the boost pumps are powered on, heat of the motive flow outputted by the fuel metering unit 50 is lost to the fuel tanks 31A, 31B. In other words, the boost pumps 43A, 43B supply the gas turbine engine 10 with the cold fuel from the fuel tanks 31A, 31B and this fuel includes the burn flow plus the motive flow that is no longer used to power the ejector pumps 60A, 60B and is thus dumped into the fuel tanks 31A, 31B. Airframe or engine fuel heater (e.g., heat exchanger 41) therefore needs to be sized to heat cold burn flow and cold motive flow to above water freezing temperature to protect the engine main fuel filter 62 from ice without any benefit from the motive flow heat due to motive heat being lost to the fuel tanks 31A, 31B. Conversely, when operating with hot fuel, the fuel system 40 continuously returns hot motive fuel back to the fuel tanks 31A, 31B, potentially heating the aircraft fuel tank beyond the design capability of the tank itself or of the aircraft and/or engine fuel system.

The fuel system 40 of the present disclosure may at least partially alleviate these drawbacks. In the embodiment shown, the fuel system 40 includes a motive flow valve 64 fluidly connected between the ejector pumps 60A, 60B and the fuel metering unit 50 to selectively allow or block fluid communication between the return outlet of the metering valve 51 and the motive flow inlet of the ejector pump 60A, 60B. Thus, closing off the connection between the return outlet of the metering valve 51 and the ejector pumps 60A, 60B prevents fuel, which has been heated through the heat exchanger 41, from flowing back in the fuel tanks 31A, 31B where it may increase temperature of the fuel therein. The motive flow valve 64 may be a servo valve such as a solenoid valve or any other suitable valve that may be controlled with a controller 70. The motive flow valve 64 may be part of the fuel metering unit 50 in some embodiments.

As aforementioned, to accommodate the return flow, the fuel system 40 has the recirculation conduit 65 that bypasses the fuel tank 31 and the heat exchanger 41. As described above with reference to Fig. 2, the fuel that exits the metering valve 51 may have been heated through passage through the heat exchanger 41 in a previous recirculation or by mixing with fuel circulated through the heat exchanger. Consequently, recirculating the fuel that leaves the return outlet of the metering valve 51 instead of flowing this fuel back to the fuel tanks 31A, 31B may provide energy savings since the recirculated fuel does not need to be heated again. This may have the advantage of allowing a downsize of the heating exchanger 41. Weight savings and performance gains may therefore be obtained with this recirculation conduit 65, which is being used to recirculate the fuel outputted by the return outlet of the metering unit 51 when the motive flow valve 64 is closed.

Still referring to Fig. 3, in the embodiment shown, the controller 70 is operatively connected to the fuel metering unit 50 and to the motive flow valve 64. The controller 70 is configured for determining that the gas turbine engine 10 is subjected to a condition causing a temperature of the fuel entering the fuel metering unit 50 to be outside an operation temperature range or to determine that the boost pump(s) is/are powered on; and causing the motive flow valve 64 to block fluid communication between the return outlet of the metering valve 51 and the motive flow inlet of the ejector pump(s) 60. It will be appreciated that, in some embodiments, the motive flow valve 64 may be operated to vary its flow circulating area between 0% and 100%.

A sensor 71 is operatively connected to the controller 70. In some embodiments, the sensor 71 is a temperature sensor operatively connected to the fuel metering unit 50 and operable to generate a signal indicative of a temperature of the fuel entering the fuel metering unit 50. The controller 70 may thus receive this signal from the sensor 71 to determine whether or not the temperature of the fuel is outside the operation temperature range.

Alternatively, the controller 70 may be configured to determine that the gas turbine engine 10 is operated in a transient condition. In such a case, the sensor 71 may be a position sensor operatively connected to a power lever 72 of the aircraft 1 and operable to generate a signal indicative of the position of the power lever 72. The controller 70 may thus receive a signal from the position sensor indicative that the power generated by the gas turbine engine 10 is decreasing or increasing. As aforementioned, the decreasing of the power may cause an increase in the fuel temperature because the hot lubricant of the lubricant system 28 has heated up the fuel and a greater portion of this heated up fuel is now flowing through the return outlet of the metering valve 51, rather than to the combustor 16, since the power requirement of the engine has decreased. Such a decrease of power may be used to cause the closing of the motive flow valve 64 to avoid hot fuel to heat up the fuel in the fuel tanks 31A, 31B. Also, for a cold day operation where a sudden increase in power and fuel flow occurs, a decrease in the inlet fuel temperature may occur. The motive flow valve 64 may be closed transiently to avoid fuel temperature at the filter 62 to drop below freezing temperature.

Alternatively, the sensor is 71 may be an ambient temperature sensor operable to generate a signal indicative of an ambient temperature of an environment in which the gas turbine engine 10 and aircraft 1 are being operated. An altitude sensor may also be used instead or in conjunction with the ambient temperature sensor. Any other suitable sensor able to generate a signal indicative of ambient temperature may alternatively be used. If the ambient temperature is outside of an ambient temperature range, the controller 70 may cause the motive flow valve 64 to block fluid communication between the fuel metering unit 50 and the ejector pumps 60A, 60B and activate the boost pump 43A, 43B to supply the fuel from the fuel tank 31 to the fuel metering unit 50.

The controller 70 may be operatively connected to the boost pumps 43A, 43B and operable to determine whether the boost pumps are being powered on or powered off. The controller 70 may cause the closing of the motive flow valve 64 upon determining that the boost pumps 43A, 43B are being powered on and drawing fuel out of the fuel tanks 31A, 31B. In some embodiments, a time delay could be allowed to close the motive flow valve 64 to ensure that the boost pumps have effectively taken over the jet pumps in supplying the engine with pressurized fuel and avoid flaming out the engine.

In some embodiments, the controller 70 may be operatively connected to a button or a switch 73 that is engageable by a pilot of the aircraft 1. Therefore, when the pilot determines that the temperature of the fuel may be outside of the operation temperature range, the pilot may toggle on the switch/button 73 to cause the closing of the motive flow valve 64.

In some embodiments, it may be determined that the temperature of the fuel is above a temperature threshold. Therefore, upon determining that the temperature of the fuel is above the temperature threshold, the controller 70 may power the boost pumps 43A, 43B to supply the fuel to the fuel metering unit 50 solely via the boost pumps 43A, 43B. The fuel system 40 may thus cause the boost pumps 43A, 43B to be the sole supplier of fuel to the main pump 44. This may ensure that the fuel metering unit 50 receives only cold fuel located in the fuel tanks 31A, 31B. The closing of the motive flow valve 64 may further ensure that the warm fuel is not reinjected in the fuel tanks 31A, 31B to avoid warming up the fuel in the fuel tanks 31A, 31B since this may be undesirable. In some cases, the heat dumped into the tank may be lost because, on an aircraft, there is typically a significant heat transfer from the wing tanks to the outside air due to low air temperature at altitude and to high forward speed. Wing tanks are thus considered as heat sinks, and the heat dumped into wing tanks is thus lost.

Conversely, it may be determined that the temperature of the fuel is below a temperature threshold such as during a cold day. Then, upon determining that the temperature of the fuel is below the temperature threshold, the controller 70 may cause the recirculation of fuel outputted from the return outlet of the metering valve 51 back to the main pump 44 via the recirculation conduit 65. The fuel that is thus recirculated bypasses the fuel tanks 31A, 31B. As aforementioned, the fuel is heated up via its passage through the heat exchanger 41. Therefore, having the fuel that has been heated recirculated back to the main pump 44 may avoid having to spend more energy to heat fuel drawn from the fuel tanks 31A, 31B. In other words, the fuel that has been warmed up via the heat exchanger 41, and that is not necessary for combustion, may be simply recirculated via the recirculation conduit 65 directly to the main pump 44 while bypassing the fuel tanks 31A, 31B. This may allow optimization and performance gains as well as a downsizing of the heat exchanger 41.

As an alternative solution, the motive shutoff valve may be replaced by a restriction sized to reduce the motive flow flowing from the return outlet of the metering valve 51 in the return conduit 46. Alternatively, the motive flow valve 64 may be configured in a partially opened position. This may have the benefit of keeping the motive flow lines primed to be able to revert back to the ejector pump immediately if needed, while still minimizing the engine inlet fuel temperature on hot days or the heat loss in aircraft tanks on cold days.

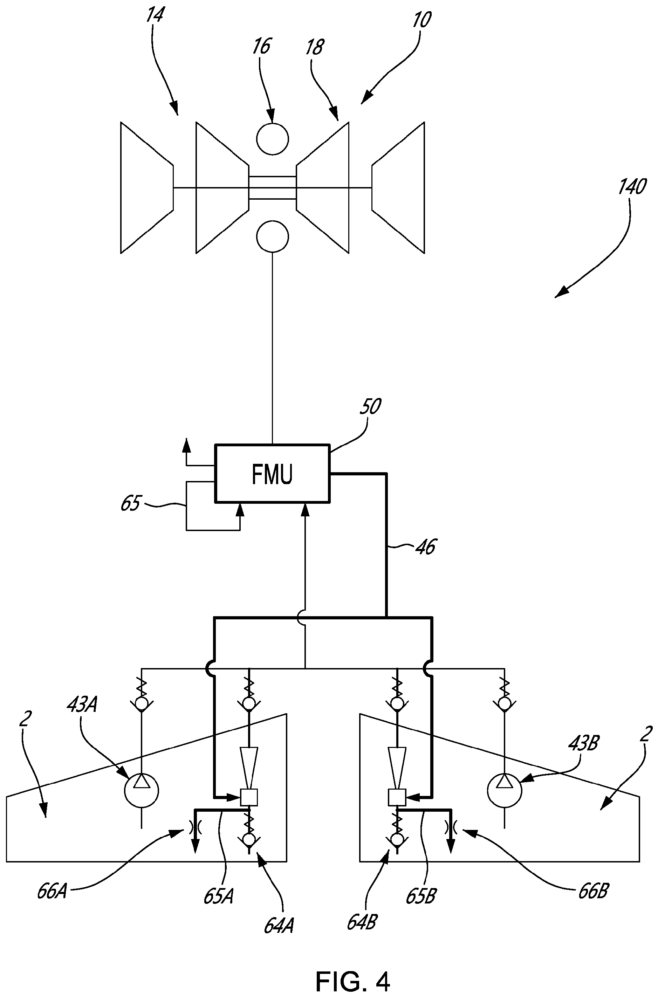

Referring now to Figs. 4-5, other embodiments of fuel systems are shown at 140 and 240, respectively. For the sake of conciseness, only features differing from the fuel system 40 of Fig. 3 will be described herein below.

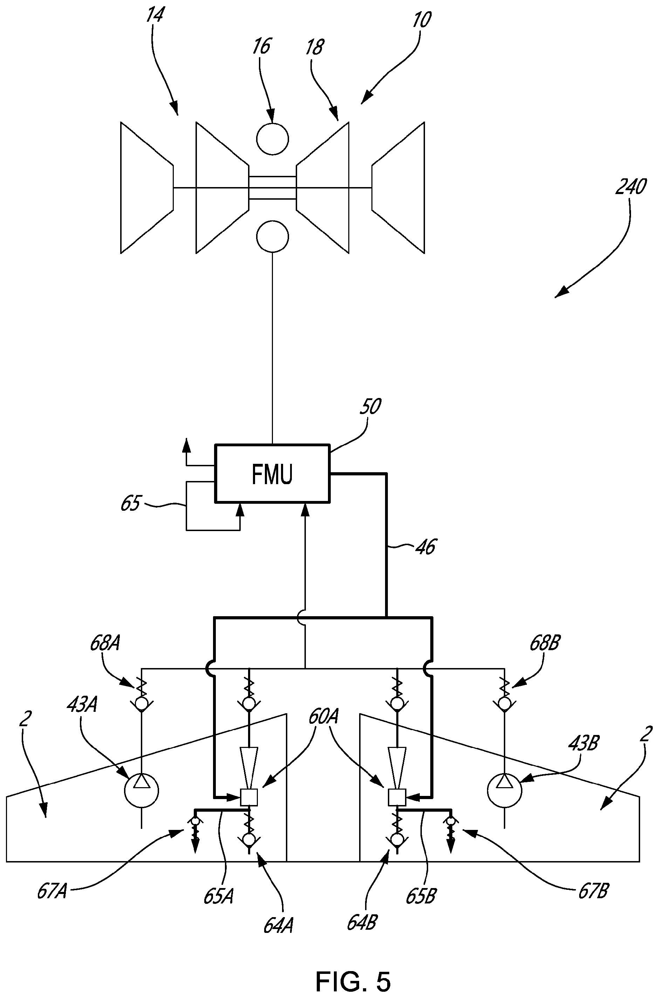

In this embodiment of the fuel system 140, the motive flow valve is replaced by second non-return valves 64A, 64B located upstream of the motive flow inlets of the ejector pumps 60A, 60B. In this embodiment, bypass lines 65A, 65B are provided to bypass the second non-return valves 64A, 64B to allows a certain amount of motive flow back to the fuel tanks 31A, 31B. An optimized system may be configured to only allow the necessary amount of motive flow to return back to the fuel tanks 31A, 31B that is needed to maintain a fuel pressure inside the ejector pumps 60A, 60B lower than the discharge pressure of the boost pumps 43A, 43B. Such optimization may be done by means of calibrated restrictions 66A, 66B (Fig. 4) on the bypass lines 65A, 65B, or by third non-return valves 67A, 67B (Fig. 5) on the bypass lines 65A, 65B with a cracking pressure lower than that of the second non-return valves 63A, 63B downstream of the ejector pumps 60A, 60B or by other more elaborate means.

In Fig. 5, the second non-return valves 64A, 64B may prevent the motive flow from flowing back to fuel tanks 31A, 31B. The second non-return valves 64A, 64B have a cracking pressure as low as possible to reduce the pressure losses in the flowing direction to reduce the impact on ejector pump performance. When the boost pumps 43A, 43B are powered on, pressure would build up in motive line and the third non-return valve 67A, 67B may have a cracking pressure slightly lower than that of fourth non-return valve 63A, 63B such that some motive flow can still be sent back to the fuel tanks 31A, 31B without interfering with operations of the boost pumps 43A, 43B. The fourth non-return valve 68A, 68B are located downstream of the boost pumps 43A, 43B and upstream of the fuel metering unit 50 relative to a flow of fuel from the fuel tanks 31A, 31B towards the fuel metering unit 50. Non-return valves 68A, 68B open when the boost pumps are powered on, and closed when the boost pumps are powered off to prevent output flow from the jet pumps from flowing back to the tank. Similarly, non-return valves 63A, 63B opens when boost pumps are off, and closed when boost pumps are on to prevent output flow from the boost pumps from flowing back to the tank. Non-return valves 64A, 64B are opened when using the ejectors and closed when not using the ejectors.

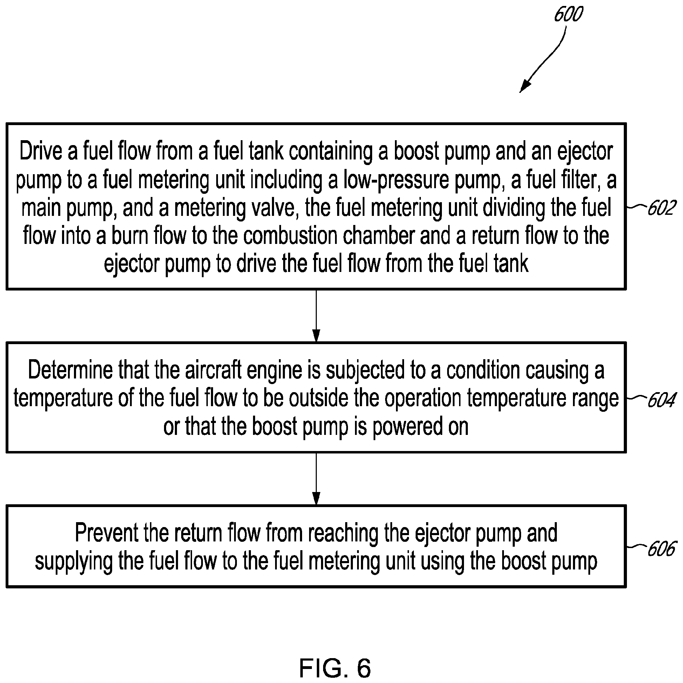

Referring now to Fig. 6, a method of mitigating fuel supplied to the combustion chamber (e.g., combustor 16) of an aircraft engine (e.g., gas turbine engine 10) being outside an operation temperature range is shown at 600. The method 600 includes driving a fuel flow from the fuel tank containing the boost pump and the ejector pump to the fuel metering unit including the low-pressure pump, the fuel filter, the main pump, and the metering valve, the fuel metering unit dividing the fuel flow into a burn flow to the combustion chamber and a return flow to the ejector pump to drive the fuel flow from the fuel tank at 602; determine that the aircraft engine is subjected to a condition causing a temperature of the fuel flow to be outside the operation temperature range or that the boost pump is powered on at 604; and prevent the return flow from reaching the ejector pump and supplying the fuel flow to the fuel metering unit using the boost pump.

If the boost pump is powered on, even if the fuel temperature is within the operation temperature range, may result in fuel being drawn from the fuel tank with the boost pump effectively resulting in no flow being outputted via the ejector pump because of the configuration of non-return valves being used. Hence, this may cause the heat of the fuel to be lost in the fuel tank, which is undesired. The boost pump may be powered on for many reasons, such as to balance the fuel between the wings, because a pilot chose to use it rather than rely on the ejector pump, and so on.

In the embodiment shown, the determining that the gas turbine engine 10 is subjected to the condition includes: receiving a signal from the sensor 71, the signal indicative of the temperature of the fuel flow being outside the operation temperature range. The determining that the gas turbine engine 10 is subjected to the condition may include: determining that the gas turbine engine 10 is operated in a transient condition. The determining that the gas turbine engine 10 is operated in the transient condition may include: receiving a signal from the sensor 71, the signal indicative that a power generated by the gas turbine engine 10 is decreasing. This may be done by receiving the signal indicative of a change of a position of the power lever 72 of the gas turbine engine 10.

Alternatively, the determining that the gas turbine engine 10 is subjected to the condition may include: determining that an ambient temperature of an environment in which the gas turbine engine 10 is being operated is outside an ambient temperature range.

Alternatively, the determining that the gas turbine engine 10 is subjected to the condition includes: determining that the boost pump 43 is powered. Alternatively, the determining that the gas turbine engine 10 is subjected to the condition may include receiving a command from a pilot of the aircraft 1 equipped with the gas turbine engine 10.

More specifically, in some embodiments, the determining that the gas turbine engine 10 is subjected to the condition includes: determining that the temperature of the fuel is above a temperature threshold; and powering the boost pump 43 to supply the fuel flow to the fuel metering unit 50 solely via the boost pump 43, that is, without using the ejector pump 60. Conversely, the method 600 may include determining that the temperature of the fuel is below a temperature threshold; and recirculating the return flow back to the main pump 44 while bypassing the fuel tank 31. This may be done with the recirculation conduit 65.

The present disclosure therefore proposes incorporating a valve that would shutoff the motive feed line when one or more of the aircraft boost pumps is in use, such that this flow would instead recirculate inside the fuel metering unit (FMU) instead of being dumped in the aircraft tank. When an aircraft boost pump is in use and discharge of ejector pump flow is prevented, stopping motive flow may prevent returning warm fuel through to the aircraft tank. On hot days, such system may prevent hot motive flow from warming the fuel in the aircraft tank that is being fed to the engine inlet by the boost pumps, thus reducing engine inlet fuel temperature. Also on hot days, when transitioning from a high engine power rating to a low power rating, the airframe boost pump(s) may be turned ON by anticipation, blocking motive flow, and thus feeding the engine with cooler fuel from the aircraft tank instead of a warmer mixture of tank flow and motive flow. This may therefore reduce engine inlet fuel temperature spikes.

On cold days, such a system may limit the fuel flow to be heated by the airframe or engine fuel heater to the burn flow only since the motive flow portion would be recirculated inside the fuel metering unit instead of dumped into the aircraft tanks and replaced with cold fuel from the tank. In such a situation, the boost pumps would be powered on. This may reduce significantly the duty of the fuel heater intended to prevent icing of the engine fuel filter 62. As an example, this may help reducing the engine warm-up dwell time before increasing power during cold engine starts by rising the fuel temperature more quickly.

The function of cutting motive flow when the aircraft boost pump are powered on may be achieved with an electrically operated shutoff valve (e.g. solenoid valve) controlled actively through the electronic engine control, the airframe avionics.

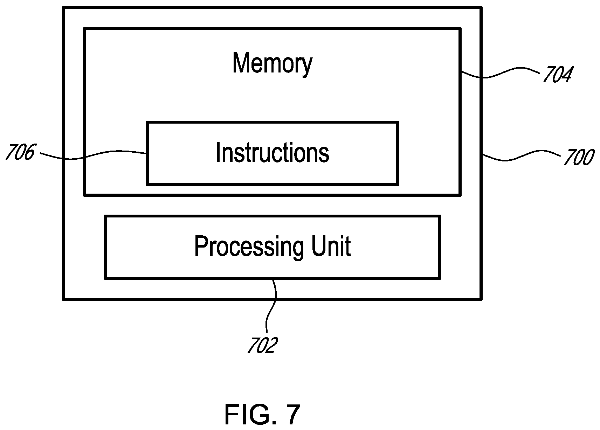

With reference to Fig. 7, an example of a computing device 700 is illustrated. For simplicity only one computing device 700 is shown but the system may include more computing devices 700 operable to exchange data. The computing devices 700 may be the same or different types of devices. The controller 70 may be implemented with one or more computing devices 700. Note that the controller 70 can be implemented as part of a full-authority digital engine controls (FADEC) or other similar device, including electronic engine control (EEC), engine control unit (ECU), electronic propeller control, propeller control unit, and the like. In some embodiments, the controller 70 is implemented as a Flight Data Acquisition Storage and Transmission system, such as a FAST^{™} system. The controller 70 may be implemented in part in the FAST^{™} system and in part in the EEC. Other embodiments may also apply.

The computing device 700 comprises a processing unit 702 and a memory 704 which has stored therein computer-executable instructions 706. The processing unit 702 may comprise any suitable devices configured to implement the method described herein such that instructions 706, when executed by the computing device 700 or other programmable apparatus, may cause the functions/acts/steps performed as part of the method as described herein to be executed. The processing unit 702 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 704 may comprise any suitable known or other machine-readable storage medium. The memory 704 may comprise non-transitory computer readable storage medium, for example, but not limited to, an electronic, magnetic, optical, electromagnetic, infrared, or semiconductor system, apparatus, or device, or any suitable combination of the foregoing. The memory 704 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 704 may comprise any storage means (e.g., devices) suitable for retrievably storing machine-readable instructions 706 executable by processing unit 702.

The methods and systems described herein may be implemented in a high level procedural or object oriented programming or scripting language, or a combination thereof, to communicate with or assist in the operation of a computer system, for example the computing device 700. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 702 of the computing device 700, to operate in a specific and predefined manner to perform the functions described herein, for example those described in the method described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A fuel system (40; 140) for an aircraft (1) engine having a combustion chamber (16), comprising:
a fuel tank (31) for containing a fuel;
a main fuel conduit (42) fluidly connecting the fuel tank (31) to the combustion chamber (16);
a fuel metering unit (50) fluidly connected on the main fuel conduit (42) and including a low-pressure pump (44A), a fuel filter (62), a main pump (44B), and a metering valve (51), the metering valve (51) having an inlet fluidly connected to the main pump (44B), a main outlet fluidly connected to the combustion chamber (16), the fuel metering unit (50) having a return outlet defined by one of the metering valve (51) and the main pump (44B);
a recirculation conduit (65) fluidly connecting the return outlet to the main fuel conduit (42) upstream of the fuel filter (62) while bypassing the fuel tank (31);
a boost pump (43; 43A) fluidly connecting the fuel tank (31) to the fuel metering unit (50) via the main fuel conduit (42);
an ejector pump (60; 60A) having a motive flow inlet fluidly connected to the return outlet, an induced inlet fluidly connected to the fuel tank (31), and an outlet fluidly connected to the main pump (44B) of the fuel metering unit (50);
a motive flow valve (64) fluidly connected between the ejector pump (60; 60A) and the fuel metering unit (50) to selectively allow or block fluid communication between the return outlet and the motive flow inlet of the ejector pump (60; 60A); and
a controller (70) having a processing unit (702) and a computer-readable medium (704) operatively connected to the processing unit (702) and having instructions (706) stored thereon executable by the processing unit (702) to:
determine that the aircraft (1) engine is subjected to a condition causing a temperature of the fuel entering the fuel metering unit (50) to be outside an operation temperature range, or determine that the boost pump (43; 43A) is powered on; and
cause the motive flow valve (64) to block fluid communication between the return outlet and the motive flow inlet of the ejector pump (60; 60A), and either activate the boost pump (43; 43A) to supply the fuel from the fuel tank (31) to the fuel metering unit (50) or maintain the boost pump (43; 43A) powered on.

2. The fuel system (40; 140) of claim 1, wherein the computer-readable medium has the instructions (706) stored thereon executable by the processing unit (702) to determine that the aircraft (1) engine is subjected to the condition by:
receiving a signal from a sensor (71), the signal indicative of the temperature of the fuel being outside the operation temperature range.

3. The fuel system (40; 140) of claim 1, wherein the computer-readable medium has the instructions (706) stored thereon executable by the processing unit (702) to determine that the aircraft (1) engine is subjected to the condition by:
determining that the aircraft (1) engine is operated in a transient condition, and optionally
receiving a signal from a sensor (71), the signal indicative that a power generated by the aircraft (1) engine is decreasing, the sensor (71) more particularly being a position sensor (71) operatively connected to a power lever (72) of the aircraft (1) engine.

4. The fuel system (40; 140) of claim 1, wherein the computer-readable medium has the instructions (706) stored thereon executable by the processing unit (702) to determine that the aircraft (1) engine is subjected to the condition by:
receiving a signal from a sensor (71), the signal indicative of an ambient temperature of an environment in which the aircraft (1) engine is being operated; and
determining that the ambient temperature is outside an ambient temperature range.

5. The fuel system (40; 140) of any of the preceding claims, wherein the computer-readable medium has the instructions (706) stored thereon executable by the processing unit (702) to determine that the aircraft (1) engine is subjected to the condition by:
determining that the boost pump (43; 43A) is powered and drawing fuel out of the fuel tank (31).

6. The fuel system (40; 140) of any of the preceding claims, wherein the computer-readable medium has the instructions (706) stored thereon executable by the processing unit (702) to determine that the aircraft (1) engine is subjected to the condition by:
receiving a command from a pilot of an aircraft (1) equipped with the aircraft (1) engine.

7. The fuel system (40; 140) of any of the preceding claims, wherein the computer-readable medium has the instructions (706) stored thereon executable by the processing unit (702) to determine that the aircraft (1) engine is subjected to the condition by determining that the temperature of the fuel is above a temperature threshold, the computer-readable medium further having instructions (706) stored thereon executable by the processing unit (702) to:
upon determining that the temperature of the fuel is above the temperature threshold, powering the boost pump (43; 43A) to supply fuel to the fuel metering unit (50) solely via the boost pump (43; 43A); and/or
upon determining that the temperature of the fuel is below the temperature threshold, recirculating the fuel outputted from the return outlet back to the main pump (44B) while bypassing the fuel tank (31).

8. A method of mitigating fuel supplied to a combustion chamber (16) of an aircraft (1) engine being outside an operation temperature range, comprising:
driving a fuel flow from a fuel tank (31) containing a boost pump (43; 43A) and an ejector pump (60; 60A) to a fuel metering unit (50) including a low-pressure pump (44A), a fuel filter (62), a main pump (44B), and a metering valve (51), the fuel metering unit (50) dividing the fuel flow into a burn flow to the combustion chamber (16) and a return flow to the ejector pump (60; 60A) to drive the fuel flow from the fuel tank (31);
determining that the aircraft (1) engine is subjected to a condition causing a temperature of the fuel flow to be outside the operation temperature range or that the boost pump (43; 43A) is powered on; and
preventing the return flow from reaching the ejector pump (60; 60A) and supplying the fuel flow to the fuel metering unit (50) using the boost pump (43; 43A).

9. The method of claim 8, wherein the determining that the aircraft (1) engine is subjected to the condition includes:
receiving a signal from a sensor (71), the signal indicative of the temperature of the fuel flow being outside the operation temperature range.

10. The method of claim 8, wherein the determining that the aircraft (1) engine is subjected to the condition includes:
determining that the aircraft (1) engine is operated in a transient condition, and optionally
receiving a signal from a sensor (71), the signal indicative that a power generated by the aircraft (1) engine is decreasing or increasing, wherein receiving the signal is more particularly indicative of a position of a power lever (72) of the aircraft (1) engine.

11. The method of any of claims 8 to 10, wherein the determining that the aircraft (1) engine is subjected to the condition includes:
determining that an ambient temperature of an environment in which the aircraft (1) engine is being operated is outside an ambient temperature range.

12. The method of claim any of claims 8 to 11, wherein the determining that the aircraft (1) engine is subjected to the condition includes:
determining that the boost pump (43; 43A) is powered, the boost pump (43; 43A) fluidly connecting the fuel tank (31) to the main pump (44B).

13. The method of any of claims 8 to 12, wherein the determining that the aircraft (1) engine is subjected to the condition includes:
receiving a command from a pilot of an aircraft (1) equipped with the aircraft (1) engine.

14. The method of any of claims 8 to 13, wherein the determining that the aircraft (1) engine is subjected to the condition includes:
determining that the temperature of the fuel is above a temperature threshold; and powering the boost pump (43; 43A) to supply the fuel flow to the fuel metering unit (50) solely via the boost pump (43; 43A).

15. The method of any of claims 8 to 13, wherein the determining that the aircraft (1) engine is subjected to the condition includes:
determining that the temperature of the fuel is below a temperature threshold; and
recirculating the return flow back to the main pump (44B) while bypassing the fuel tank (31).
